# FASCICULE DE BREVET EUROPEEN

(11) **EP 3 800 367 B1**
(45) Date de publication et mention de la délivrance du brevet: **27.04.2022**
(21) Numéro de dépôt: 20199814.3
(22) Date de dépôt: 02.10.2020
(51) Int. Cl.: F16D 7/02, F16D 43/25, B64C 13/28

(54) **LIMITEUR DE COUPLE D'ACTIONNEUR D'AÉRONEF, ACTIONNEUR, AÉRONEF ET PROCÉDÉ ASSOCIÉS**
DREHMOMENTBEGRENZER EINES STELLGLIEDS EINES LUFTFAHRZEUGS, ENTSPRECHENDES STELLGLIED, LUFTFAHRZEUG UND VERFAHREN
TORQUE LIMITER FOR ACTUATOR OF AN AIRCRAFT, ASSOCIATED ACTUATOR, AIRCRAFT AND METHOD

(30) Priorité: 03.10.2019 FR 1910951
(43) Date de publication de la demande: 07.04.2021
(73) Titulaire: Dassault Aviation, 75008 Paris (FR)
(72) Inventeur: FAURE, Antoine, Patrick, 92214 SAINT CLOUD (FR)
(74) Mandataire: Lavoix

(56) Documents cités:
- WO-A1-91/06783
- JP-A- S4 914 848
- US-A- 5 199 538

## Description

La présente invention concerne un limiteur de couple d'actionneur d'aéronef selon le préambule de la revendication 1.

WO 91/06783 A1 et JP S49 14848 A décrivent des limiteurs de couple.

L'actionneur est destiné notamment à être utilisé pour déployer des surfaces mobiles d'aéronefs, en particulier des volets ou des gouvernes.

Dans la plupart des avions modernes, les actionneurs de surfaces mobiles sont des actionneurs électromécaniques.

Un actionneur électromécanique comprend généralement un moteur électrique et une tige d'actionnement déplaçable à l'aide d'un mécanisme de déplacement entraîné par le moteur. L'alimentation électrique du moteur de l'actionneur, pilotée à partir du cockpit de l'avion, permet de déplacer la tige sur la course requise.

Pour protéger l'actionneur et les pièces déplacées par celui-ci, il est connu d'intercaler un limiteur de couple entre le moteur et le mécanisme de déplacement de la tige. Le limiteur de couple est taré (par exemple par réglage sur table) à une certaine valeur de déclenchement pour limiter l'effort développé par l'actionneur en cas de panne, notamment lors d'un blocage de la gouverne, en cas d'un dysfonctionnement de l'asservissement, ou/et en cas d'un effort aérodynamique saturant.

Le dimensionnement des commandes de vol, et notamment des actionneurs prévus pour ces commandes doit répondre au pire cas de fonctionnement, en termes de charge, de vitesse, de température minimale d'utilisation, et de coincement.

À cet égard, le froid que subit l'aéronef est un facteur important du dimensionnement des actionneurs. Ainsi, les très basses températures (proches de - 55°C) jouent un rôle dimensionnant sur les temps de réponse de l'actionneur, les efforts développés et les vitesses de déplacement. En conséquence, les actionneurs sont dimensionnés pour ces pires cas de fonctionnements, en augmentant leur puissance et leur rapidité, afin de garantir un fonctionnement conforme par temps froid.

Toutefois, le couple de déclenchement, auquel le limiteur de couple débraye et cesse de transmettre un couple, varie en fonction de la température.

La sensibilité thermique du limiteur abaisse le couple de déclenchement avec une diminution de la température. De plus, le froid augmente les frottements internes et diminue le rendement global de l'actionneur. En conséquence, le froid abaisse l'effort disponible pour déplacer les gouvernes en raison de l'augmentation des viscosités des lubrifiants présents dans les mécanismes.

L'actionneur doit être capable de déplacer la gouverne sous un effort aérodynamique maximum au froid sans faire débrayer le limiteur de couple. Le limiteur doit donc permettre de vaincre les frottements dus au froid et la charge à déplacer.

Ceci créé une difficulté, car à température ambiante, les frottements internes étant beaucoup plus faibles, produisant un meilleur rendement, l'effort développé par l'actionneur est beaucoup plus important qu'au froid pour un même tarage de limiteur.

Ceci nécessite de surdimensionner les pièces situées en aval de l'actionneur, ainsi que la structure de l'avion.

Un but de l'invention est d'obtenir un limiteur de couple d'actionneur d'aéronef fonctionnant plus efficacement à basse température et n'imposant ainsi pas de surdimensionner les pièces situées en aval de l'actionneur, ainsi que la structure de l'avion, notamment lors de manœuvres à température ambiante ou au chaud.

À cet effet, l'invention a pour objet un limiteur de couple du type précité selon la partie caractérisante de la revendication 1.

Le limiteur de couple selon l'invention peut comprendre l'une ou plusieurs des caractéristiques des revendications 2 à 10, prise(s) isolément ou suivant toute combinaison techniquement possible.

L'invention a également pour objet un actionneur d'aéronef selon la revendication 11.

L'actionneur selon l'invention peut comprendre les caractéristiques de la revendication 12.

L'invention a pour objet un aéronef selon la revendication 13.

L'invention a également pour objet un procédé d'utilisation d'un actionneur d'aéronef selon la revendication 14.

L'invention sera mieux comprise à la lecture de la description qui va suivre, donnée uniquement à titre d'exemple, et faite en se référant aux dessins annexés, sur lesquels :
- La figure 1 est une vue schématique de dessus d'un premier aéronef équipé d'actionneurs selon l'invention ;
- La figure 2 est une vue schématique d'un actionneur d'aéronef selon l'invention, muni d'un limiteur de couple ;
- La figure 3 est une vue en perspective éclatée du limiteur de couple de l'actionneur d'aéronef de la figure 2 ;
- La figure 4 est une vue prise en coupe suivant un plan axial médian du limiteur de couple de la figure 3, lorsque le limiteur de couple est soumis au froid;
- La figure 5 est une vue analogue à la figure 4, lorsque le limiteur de couple est soumis au chaud ;
- La figure 6 est une vue analogue à la figure 4 d'un deuxième limiteur de couple selon l'invention soumis au froid ;
- La figure 7 est une vue analogue à la figure 6 du deuxième limiteur de couple selon l'invention à température ambiante ;
- La figure 8 est une vue analogue à la figure 6 du deuxième limiteur de couple selon l'invention soumis au chaud ; et
- La figure 9 illustre des courbes de couples de déclenchement en fonction de la température pour un limiteur de couple de l'état de la technique et pour un limiteur de couple selon l'invention.

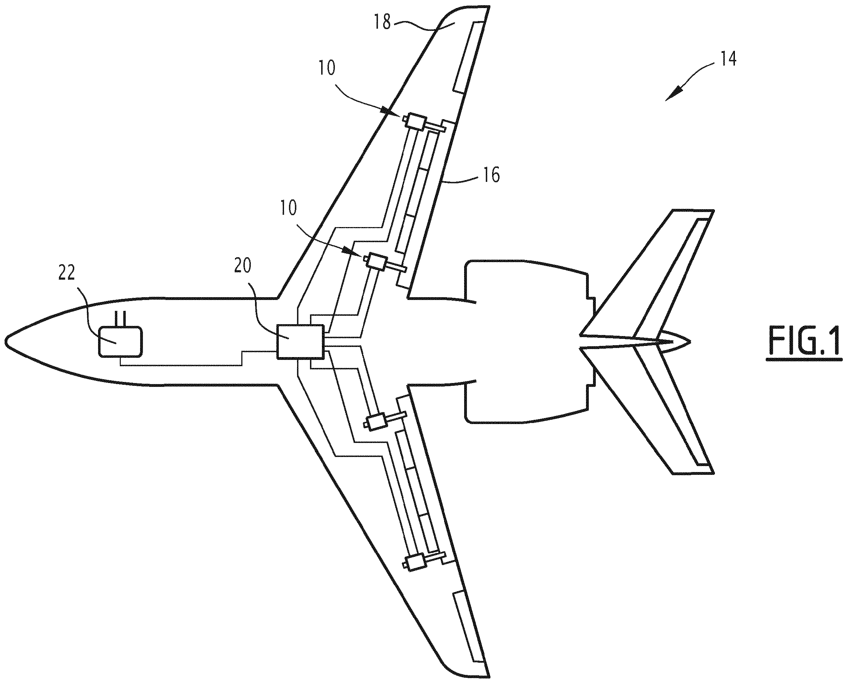

Un premier actionneur 10 muni d'un limiteur de couple 12 selon l'invention est destiné à être utilisé dans un aéronef 14 représenté sur la figure 1. L'aéronef 14 est par exemple un avion civil, notamment un avion d'affaires. En variante, l'aéronef 14 est un avion militaire ou un drone.

L'actionneur 10 est un actionneur électromécanique destiné à permettre le déploiement d'une surface mobile de l'aéronef 14. La surface mobile est en particulier une gouverne, ou un volet 16 déployé à partir d'une aile 18 de l'aéronef.

En variante, l'actionneur 10 est utilisé pour déplacer des gouvernes de vol de type aileron, profondeur, direction actionnées par des commandes de vol électromécaniques équipées de limiteurs de couple 12 à friction selon l'invention. Plus généralement, l'invention s'applique à tout actionneur équipé d'un limiteur de couple susceptible d'être soumis à de grandes amplitudes de température de fonctionnement.

Pour piloter l'actionneur 10, l'aéronef 14 comporte une centrale de commande 20 raccordée électriquement à chaque actionneur 10 et au cockpit 22 pour activer et/ou désactiver l'actionneur 10 et permettre le déplacement de la surface mobile sur un ordre de manœuvre provenant du cockpit 22.

Dans l'exemple représenté sur la figure 1, le volet 16 est piloté par deux actionneurs 10 selon l'invention, chaque actionneur 10 actionnant un côté du volet 16.

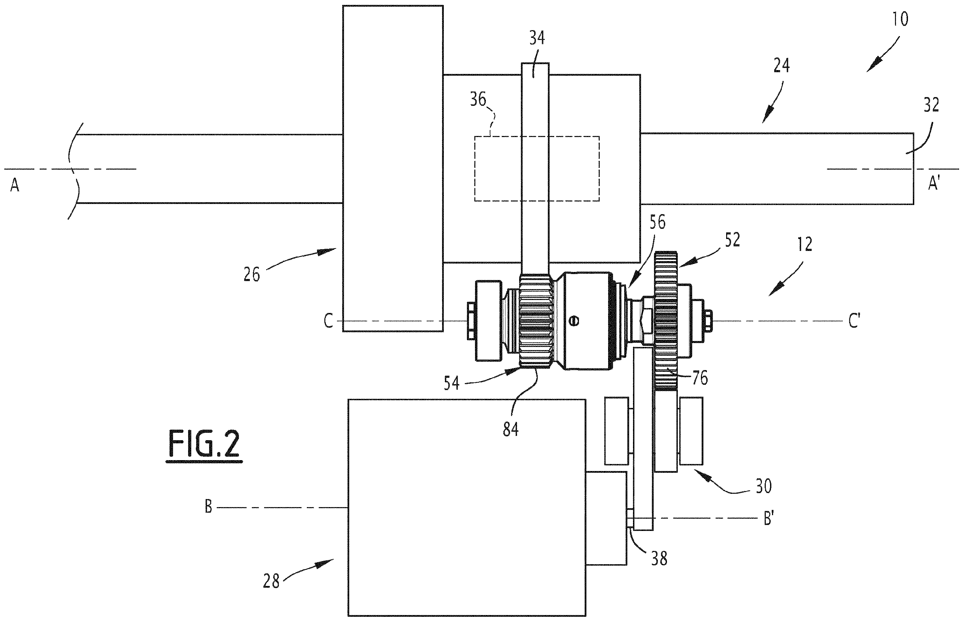

En référence à la figure 2, l'actionneur 10 selon l'invention comporte un organe 24 mobile d'actionnement, un mécanisme 26 de déplacement de l'organe mobile d'actionnement 24 et un moteur électrique 28 avantageusement muni d'un réducteur 30.

L'actionneur 10 comporte, entre le moteur électrique 28 et le mécanisme de déplacement 26, le limiteur de couple 12 selon l'invention.

L'organe mobile d'actionnement 24 comporte dans cet exemple une tige 32 déplaçable en translation le long d'un axe A-A' par rapport au mécanisme de déplacement 26. La tige 32 est munie extérieurement d'un filetage (non représenté) coopérant avec le mécanisme de déplacement 26 pour l'entraînement en translation de la tige 32.

Le mécanisme de déplacement 26 comporte un organe rotatif 34 destiné à être entraîné en rotation par le moteur 28, par l'intermédiaire du limiteur de couple 12 et un mécanisme de conversion de mouvement 36 propre à convertir la rotation de l'organe rotatif 34 en un déplacement en translation de la tige 32.

Le moteur électrique 28 comporte un arbre de sortie 38. Dans cet exemple, l'arbre de sortie 38 est disposé le long d'un axe B-B' parallèle à l'axe A-A'. L'arbre de sortie 28 est raccordé mécaniquement au limiteur de couple 12, par l'intermédiaire du réducteur 30, lorsque ce dernier est présent.

En référence aux figures 2 à 4, le limiteur de couple 12 est propre à permettre l'entraînement en rotation du mécanisme de déplacement 26 et par suite, le déplacement de la tige 32, sous l'effet de la rotation de l'arbre de sortie 38 du moteur électrique 28, jusqu'à une valeur seuil de couple transmise à travers le limiteur de couple 12. Le limiteur de couple 12 est propre à débrayer, pour empêcher la transmission de mouvement entre le moteur électrique 28 et le mécanisme de déplacement 26, lorsque le couple appliqué à travers le limiteur de couple 12 est supérieur à la valeur seuil de couple.

Comme visible sur les figures 2 à 5, le limiteur de couple 12 comporte un arbre rotatif 50 autour d'un axe de rotation C-C', monté sur des roulements 51A, 51B.

Le limiteur de couple 12 comprend un organe rotatif d'entrée 52, entrainé en rotation par un train d'engrenages raccordé au moteur 28, et solidaire en rotation de l'arbre rotatif 50, et un organe rotatif entraîné 54, propre à être entraîné en rotation par l'arbre rotatif 50 en deçà de la valeur seuil de couple.

Le limiteur de couple 12 comporte en outre un système débrayable 56 de transmission de couple entre l'arbre rotatif 50 et l'organe rotatif entraîné 54, propre à débrayer au-delà de la valeur seuil de couple.

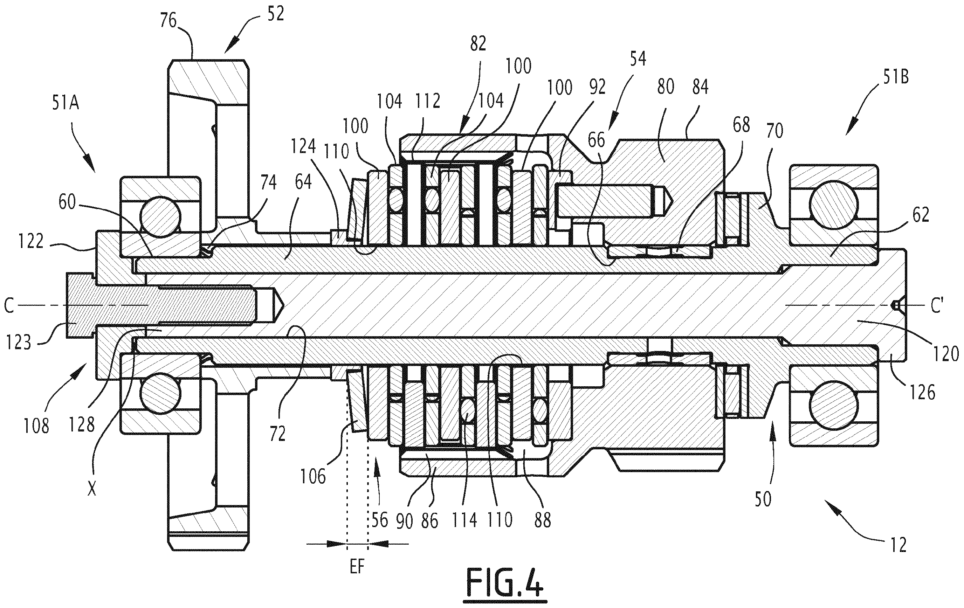

En référence à la figure 4, l'arbre rotatif 50 définit, à ses extrémités 60, 62, des régions lisses de calage des roulements 51A, 51B. L'arbre rotatif 50 définit, entre les régions lisses, au moins une région 64 cannelée.

Dans cet exemple, l'arbre rotatif 50 délimite en outre un logement annulaire 66 de réception d'un palier lisse 68, ici sous forme de deux demi-coquilles, guidant en rotation l'organe rotatif entraîné 54. L'arbre rotatif 50 comporte en outre une couronne arrière 70 de butée.

Dans cet exemple, l'arbre rotatif 50 définit un alésage central 72 d'axe C-C', qui débouche aux extrémités 60, 62 de l'arbre rotatif 50.

L'axe C-C' de rotation de l'arbre rotatif 50 est ici parallèle à l'axe A-A' et à l'axe B-B'.

L'arbre rotatif 50 est réalisé en un premier matériau, en particulier un métal tel que de l'acier. Le premier matériau présente un premier coefficient de dilatation thermique par exemple inférieur à 15 x 10⁻⁶ mm/mm/°C, notamment égal à 11 x 10⁻⁶ mm/mm/°C pour l'acier.

Les roulements 51A, 51B sont montés aux extrémités 60, 62 de l'arbre 50 sur les régions lisses.

Un jeu axial intermédiaire 74 est prévu entre le roulement 51A situé sur la première extrémité 60 pour permettre une translation du roulement 51A le long de l'axe C-C', comme on le verra plus bas.

Au contraire, le roulement 51B situé sur la deuxième région lisse 62 est calé contre la couronne arrière 70.

L'organe rotatif d'entrée 52 est ici formé par une roue dentée engagée de manière solidaire en rotation sur la région intermédiaire cannelée 64. Ainsi, l'organe rotatif d'entrée 52 est solidaire en rotation autour de l'axe C-C' avec l'arbre rotatif 50.

L'organe rotatif d'entrée 52 est interposé sur l'arbre rotatif 50 entre le roulement 51A et le système débrayable 56. Il est mobile en translation le long de l'axe C-C' sur les cannelures de la région intermédiaire cannelée 64.

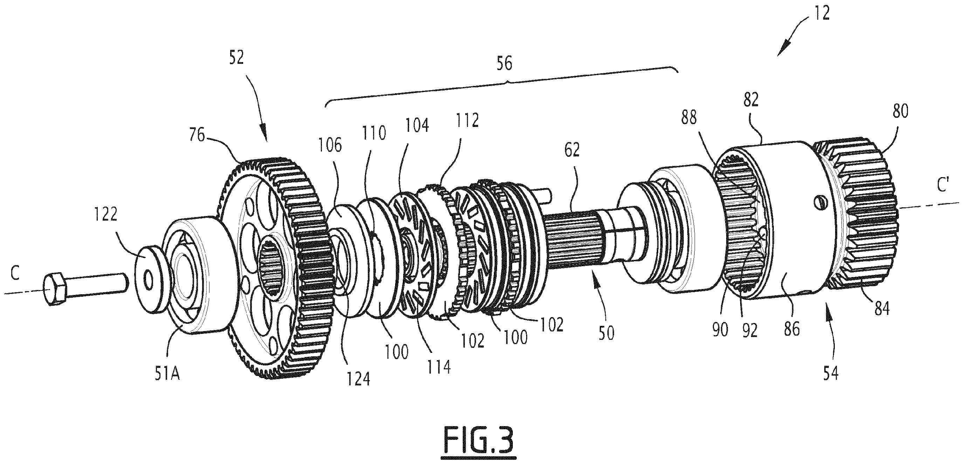

Dans l'exemple représenté sur les figures 3 et 4, l'organe rotatif d'entrée 52 comprend une denture périphérique externe 76 propre à coopérer avec le réducteur 30 et/ou avec le moteur électrique 28 pour permettre l'entraînement en rotation conjoint de l'organe rotatif d'entrée 52 et de l'arbre rotatif 50 autour de l'axe C-C', lors de la rotation de l'arbre de sortie 38 du moteur 28.

L'organe rotatif entraîné 54 comporte une chemise 80 d'appui sur l'arbre de sortie 38 et un manchon 82 de coopération avec le système débrayable 56, monté autour du système débrayable 56.

La chemise 80 est montée rotative autour de l'arbre 50, en appui sur le palier lisse de guidage 68. Elle présente extérieurement une denture périphérique 84 engagée sur l'organe rotatif 34 du mécanisme de déplacement 26.

Le manchon de coopération 82 fait saillie axialement à partir de la chemise 80. Il présente une paroi périphérique 86 délimitant une cavité cylindrique interne 88 recevant une partie de l'arbre 50 et au moins une partie du système débrayable 56.

La paroi périphérique 86 est munie d'une denture interne 90 faisant saillie radialement vers l'axe C-C', pour coopérer avec le système débrayable 56.

La chemise 80 délimite un fond de la cavité 88, d'un côté axial de celle-ci. Le fond de la cavité 88 est muni d'au moins une cale axiale 92 montée fixe dans la chemise 80. La chemise 80 débouche axialement d'un autre côté axial de celle-ci.

En référence aux figures 3 et 4, le système débrayable 56 comporte une pluralité d'organes de contact 100, solidaires en rotation de l'arbre rotatif 50, une pluralité d'organes de contact complémentaires 102, solidaires en rotation de l'organe entraîné 54, chaque organe de contact complémentaire 102 étant intercalé entre deux organes de contact 100.

Le système débrayable 56 comporte en outre, entre chaque organe de contact 100 et chaque organe de contact complémentaire 102, un organe de friction 104 propre à permettre une transmission de couple entre l'organe de contact 100 et l'organe de contact complémentaire 102, en deçà de la valeur seuil de couple.

Le système débrayable 56 comporte en outre un organe élastique de serrage 106 de chaque organe de contact 100 contre l'organe de contact complémentaire 102 par l'intermédiaire de l'organe de friction 104, et selon l'invention, un mécanisme 108 de déplacement de l'organe de serrage 106, lors de variations de température.

Dans cet exemple, chaque organe de contact 100 est formé d'un disque percé en son centre, et muni d'une denture interne 110 engagée sur la région intermédiaire cannelée 64.

Chaque organe de contact complémentaire 102 est également formé par un disque percé en son centre et présentant une denture externe 112 périphérique engagée dans la denture interne 90 de l'organe entraîné 54.

L'organe de contact complémentaire 102 est monté librement rotatif autour de la région intermédiaire cannelée 64, sans engagement avec les cannelures de la région intermédiaire 64.

L'organe de friction 104 est formé par un disque intermédiaire intercalé entre chaque organe de contact 100 et l'organe de contact complémentaire 102 adjacent. Chaque organe de friction 104 est monté librement rotatif autour de la région intermédiaire cannelée 64, sans engagement avec les cannelures de la région intermédiaire 64.

Dans l'exemple représenté sur la figure 3, le disque intermédiaire est muni d'une pluralité d'aiguilles rotatives 114 débouchant de part et d'autre du disque intermédiaire pour rentrer en contact respectivement avec l'organe de contact 100 et avec l'organe de contact complémentaire 102.

Le système débrayable 56 comprend ainsi au moins un empilement de friction d'un organe de contact 100, d'un organe de friction 104 et d'un organe de contact complémentaire 102 perpendiculairement à l'axe C-C' de rotation, entre la cale 92 au fond de la cavité 88 du manchon de coopération 82 et l'organe de serrage 106.

L'organe de serrage 106 est par exemple formé par une rondelle ressort (également dénommée rondelle « Belleville» ou «Schnorr » ou encore « rondelle élastique »). Cette rondelle ressort présente ici une forme tronconique, de sommet dirigé à l'écart des organes de contact 100 et des organes de contact complémentaires 102. Dans cet exemple, une base de l'organe de serrage 106 est appliquée contre un organe de contact 100.

L'organe de serrage 106 est propre à appliquer une force axiale le long de l'axe C-C' pour serrer chaque empilement constitué d'un organe de contact 100, d'un organe de contact complémentaire 102 et d'un organe de friction 104 interposé entre l'organe de contact 100 et l'organe de contact complémentaire 102. La rondelle ressort présente un faible encombrement et une raideur plus importante qu'un ressort à fil en spiral.

La force axiale appliquée à l'organe de serrage 106 par le mécanisme 108 de déplacement de l'organe de serrage 106, définit la valeur seuil du couple pouvant être transmis par les organes de contact 100 aux organes de contact complémentaires 102.

Lorsque le couple appliqué entre d'un côté, l'arbre rotatif 50 et d'un autre côté, l'organe rotatif entrainé 54 est inférieur à la valeur seuil de couple définie par le serrage de l'organe de serrage 106, chaque organe de contact complémentaire 102 est entraîné en rotation autour de l'axe C-C' par un organe de contact 100 lors de la rotation de l'arbre rotatif 50. Le système débrayable 56 est alors embrayé.

Lorsque le couple appliqué entre d'un côté, l'arbre rotatif 50 et d'un autre côté, l'organe rotatif entrainé 54 est supérieur à la valeur seuil de couple définie par le serrage de l'organe de serrage 106, chaque organe de contact complémentaire 102 reste libre en rotation autour de l'axe C-C' par rapport à l'organe de contact 100 et l'organe de friction 104 assure le glissement de l'organe de contact 100 par rapport à l'organe de contact complémentaire 102 lors de la rotation de l'organe de contact 100. Le système débrayable 56 est alors débrayé.

Le mécanisme de déplacement 108 comporte un organe de déplacement 120 propre à se contracter ou à se dilater différemment par rapport à l'arbre rotatif 50, le long de l'axe C-C' lors d'une variation de température.

Le mécanisme de déplacement 108 comporte également une butée 122 de transmission de mouvement, déplaçable conjointement avec l'organe de déplacement 120, vissée sur la tige par une vis de réglage 123 et avantageusement, dans cet exemple, une butée secondaire 124 d'appui sur l'organe de serrage 106.

L'organe de déplacement 120 est ici formé par une tige insérée dans l'alésage 72 ménagé au sein de l'arbre rotatif 50.

La tige est calée à une première extrémité 126 par une tête disposée en appui sur une extrémité 62 de l'arbre 50. Elle comporte une deuxième extrémité 128 librement déplaçable en translation par rapport à l'arbre 50 le long de l'axe C-C', sur laquelle est montée la butée de transmission 122.

L'organe de déplacement 120 est formé d'un deuxième matériau, distinct du premier matériau formant l'arbre rotatif 50 ou formant le ou chaque empilement de friction du système débrayable 56 comportant chaque organe de contact 100, chaque organe de contact complémentaire 102 et chaque organe de friction 104 et la cale axiale 92.

Le deuxième matériau présente un deuxième coefficient de dilatation thermique distinct de celui du premier matériau formant l'arbre rotatif 50. Le deuxième matériau, ici pour l'exemple, l'aluminium, possède un coefficient de dilatation thermique supérieur à celui du premier matériau qui compose l'arbre rotatif 50 et le ou chaque empilement de friction du système débrayable 56, avantageusement d'au moins 10⁻⁶ mm/mm/°C. Ce coefficient de dilatation thermique est notamment supérieur à 20 x 10⁻⁶ mm/mm/°C, notamment égal à 23 x 10⁻⁶mm/mm/°C dans le cas de l'aluminium.

Par suite, lors d'une variation de température, par exemple une augmentation ou une diminution de température, la dilatation ou la contraction respective de l'organe de déplacement 120 le long de l'axe C-C' est différente de la dilatation ou de la contraction respective de l'arbre rotatif 50 le long du même axe d'un facteur supérieur à 1,5 et notamment égal à 2 pour une même longueur.

De ce fait, la deuxième extrémité 128 de l'organe de déplacement 120 est propre à se déplacer le long de l'axe C-C' par rapport à l'arbre rotatif 50. Elle est par exemple propre à éloigner la butée de transmission 122 de l'organe de serrage 106 lors d'une augmentation de température, et à rapprocher la butée 122 de l'organe de serrage 106 lors d'une diminution de température.

La butée de transmission 122 est disposée en appui axial sur le roulement 51A primaire. Elle est définie pour permettre un déplacement axial le long de l'axe C-C' et pour être distante d'un jeu axial fonctionnel résiduel X (voir figure 4) de l'extrémité 60 lorsque l'organe de déplacement 120 atteint sa plus petite dimension occasionnée au froid.

La vis 123 est propre à engendrer la force axiale, dont l'intensité est maitrisée par l'épaisseur de la butée de transmission 122.

La butée secondaire 124 est disposée en appui d'une part, sur l'organe de serrage 106, et d'autre part sur l'organe rotatif d'entrée 52.

Le roulement 51A et l'organe rotatif d'entrée 52 sont empilés entre la butée de transmission 122 et la butée secondaire 124. Le déplacement de la butée de transmission 122 engendre une translation le long de l'axe C-C' de l'organe de serrage 106 par l'intermédiaire du roulement 51A, de l'organe rotatif d'entrée 52 et de la butée secondaire d'appui 124.

Ainsi, lors d'une augmentation de température, l'organe de déplacement 120 se dilate plus que les pièces qui maintiennent l'organe de serrage 106 sous charge. La butée de transmission 122 s'éloigne de l'organe de serrage 106, permettant une diminution de la charge appliquée à l'organe de serrage 106 et diminuant la force de serrage entre chaque organe de contact 100 et chaque organe de contact complémentaire 102. Ceci diminue relativement la valeur seuil de couple de débrayage.

Au contraire, lors d'une diminution de température, l'organe de déplacement 120 se rétreint plus que les pièces qui maintiennent l'organe de serrage 106 sous charge. La butée de transmission 122 se rapproche de l'organe de serrage 106, augmentant la précharge de l'organe de serrage 106 qui se déforme et produit une augmentation du serrage entre chaque organe de contact 100 et chaque organe de contact complémentaire 102. Ceci augmente relativement la valeur seuil de couple.

Le limiteur de couple 12 est ainsi thermosensible.

Le fonctionnement du limiteur de couple 12 lors d'une activation de l'actionneur 10 va maintenant être décrit.

Initialement, lorsque l'actionneur 10 doit être activé, par exemple pour déployer une surface mobile telle qu'un volet 16, le moteur électrique 28 est alimenté électriquement, engendrant une rotation de son arbre de sortie 38. Cette rotation est transmise à l'organe rotatif d'entrée 52 par l'intermédiaire du réducteur 30, si celui-ci est présent.

La rotation de l'organe rotatif d'entrée 52 autour de l'axe C-C' entraîne à son tour conjointement l'arbre rotatif 50, et les organes de contact 100 solidaires en rotation de l'arbre rotatif 50.

Lorsque le couple appliqué entre les organes de contact 100 et les organes de contact complémentaires 102 est inférieur à la valeur seuil de couple, le serrage entre les organes de contact 100 et les organes de contact complémentaires 102 par l'intermédiaire des organes de friction 104 engendre l'entraînement en rotation des organes de contact complémentaires 102 autour de l'axe C-C' et la rotation conjointe de l'organe rotatif entraîné 54 autour de l'axe C-C'.

L'organe entraîné 54 entraîne alors en rotation l'organe rotatif 34 du mécanisme de déplacement 26, produisant un déplacement de l'organe mobile d'actionnement 24.

En cas de blocage de l'organe mobile d'actionnement 24, le couple appliqué entre les organes de contact 100 et les organes de contact complémentaires 102 par l'intermédiaire des organes de friction 104 augmente au-delà de la valeur seuil. Le système débrayable 56 débraye. Les organes de contact 100 sont entraînés en rotation par rapport aux organes de contact complémentaire 102 autour de l'axe C-C', sans transmettre leur mouvement de rotation aux organes de contact complémentaires 102.

Le limiteur de couple 12 étant thermosensible, lors d'une diminution de température, par exemple si l'actionneur 10 opère à une température basse de l'ordre de -40 °C comme illustré sur la figure 4, une contraction différentielle se produit entre l'arbre rotatif 50 et l'organe de déplacement 120, produisant un déplacement de la butée de transmission 122 vers l'organe de serrage 106. Ce déplacement est transmis de la butée de transmission 122 à l'organe de serrage 106, avantageusement par l'empilement du roulement 51A, de l'organe rotatif d'entrée 52 et de la butée secondaire d'appui 124.

L'organe de serrage 106 se contracte axialement pour présenter une étendue axiale à froid EF.

La force de serrage entre les organes de contact 100 et les organes de contact complémentaires 102 par l'intermédiaire des organes de friction 104 augmente alors et compense partiellement la baisse de la valeur seuil de couple qui peut être observée à basse température.

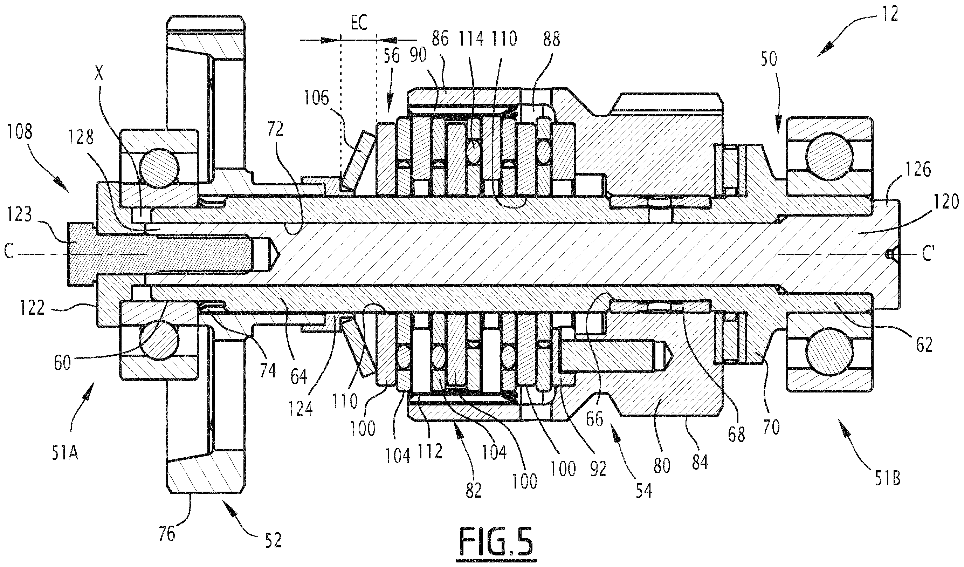

Au contraire, lorsque la température augmente, comme illustré sur la figure 5, la dilatation différentielle entre l'arbre rotatif 50 et l'organe de déplacement 120 produit un déplacement de la butée de transmission 122 à l'écart de l'organe de serrage 106. L'organe de serrage se dilate axialement pour présenter une étendue axiale à chaud EC supérieure à l'étendue axiale à froid EF. La force de serrage s'appliquant entre les organes de contact 100 et les organes de contact complémentaires 102 diminue.

Ceci produit une diminution de la valeur seuil de couple à laquelle le système débraye, malgré l'augmentation de cette valeur seuil due à l'augmentation de température.

Le déplacement de la butée de transmission 122 le long de l'axe C-C' est proportionnel à la longueur des pièces présentes dans l'empilement du système débrayable et de l'organe de déplacement 120.

Dans cet exemple, le déplacement atteint 0,07 mm pour des températures variant de +85°C à -55°C. Il a été volontairement exagéré sur les figures 4 et 5. Ce déplacement est d'autant plus important que les matériaux présentent des coefficients de dilatations éloignés (le titane par exemple car son coefficient de dilatation thermique est encore plus petit que celui de l'acier. (8,6 x 10-6mm/mm/°C)).

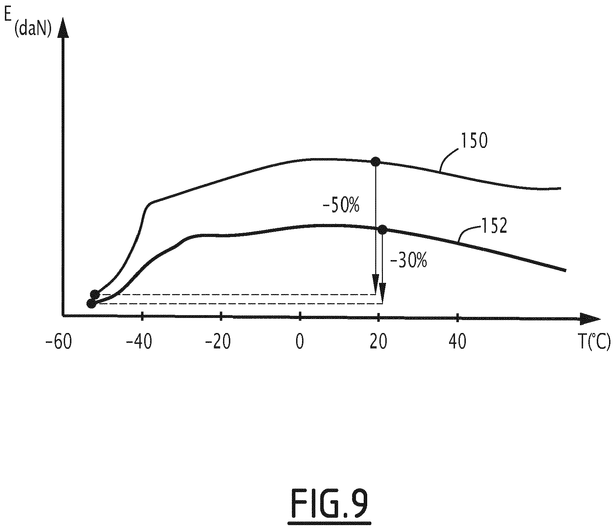

Ce fonctionnement avantageux du limiteur de couple 12 selon l'invention se distingue sur la figure 9. La courbe 150 illustre le comportement de l'effort disponible au niveau de l'actionneur qui se produit pour un limiteur de couple de l'état de la technique en fonction de la température. L'abattement de l'effort disponible constaté entre 20°C et -55°C est de l'ordre de 50%.

Comparativement à la courbe 152, le limiteur de couple 12 selon l'invention, bien que présentant une valeur seuil à basse température proche de celle du limiteur de couple de l'état de la technique, limite fortement l'augmentation de la valeur seuil de couple de déclenchement à plus haute température par rapport au limiteur de couple de l'état de la technique. L'abattement de l'effort disponible constaté entre 20°C et -55°C est ici de l'ordre de seulement 30%.

Ainsi, le dimensionnement des pièces situées en aval de l'actionneur 10 peut être modifié pour alléger leur structure, puisqu'il n'est plus nécessaire que ces pièces soient aussi résistantes mécaniquement à température ambiante, compte tenu de la limitation de couple qui s'appliquera.

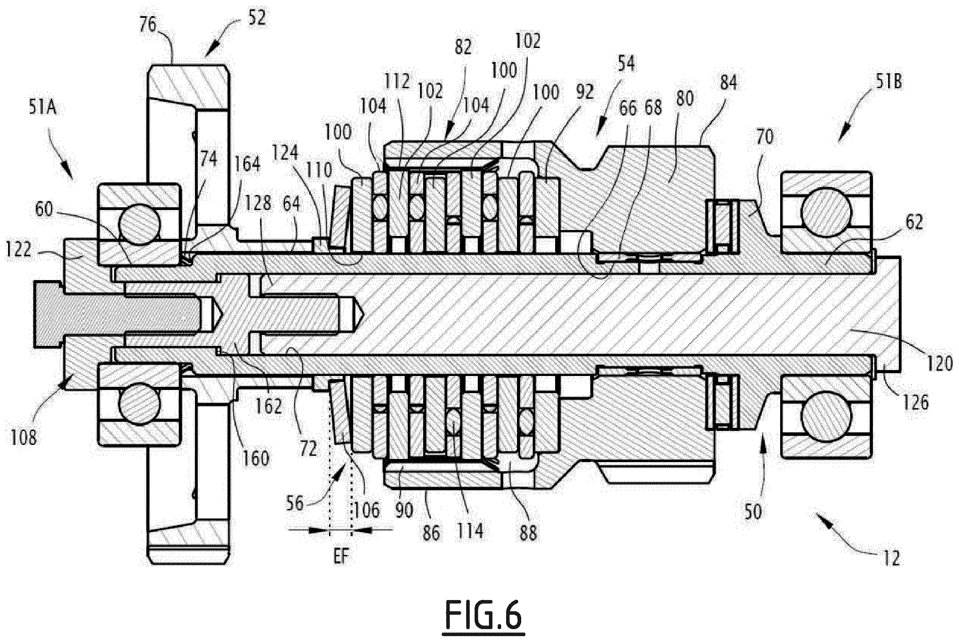

Le limiteur de couple 12 représenté sur les figures 6 à 8 diffère de celui illustré sur la figure 4 en ce qu'un appui 160 de blocage du déplacement de l'organe de déplacement 120 est prévu dans l'alésage 72 de l'arbre rotatif 50, par exemple sous forme d'un épaulement, pour limiter la dilatation différentielle entre l'organe de déplacement 120 et l'arbre rotatif 50 à une valeur maximale lors de fonctionnement à des températures supérieures à celle du réglage initial.

Dans cet exemple, l'organe de déplacement 120 est en outre muni d'une tête 162 définissant une surface de butée complémentaire 164 destinée à entrer en contact avec l'épaulement de l'alésage 72. La tête 162 est vissée à l'extrémité de la tige de l'organe de déplacement 120.

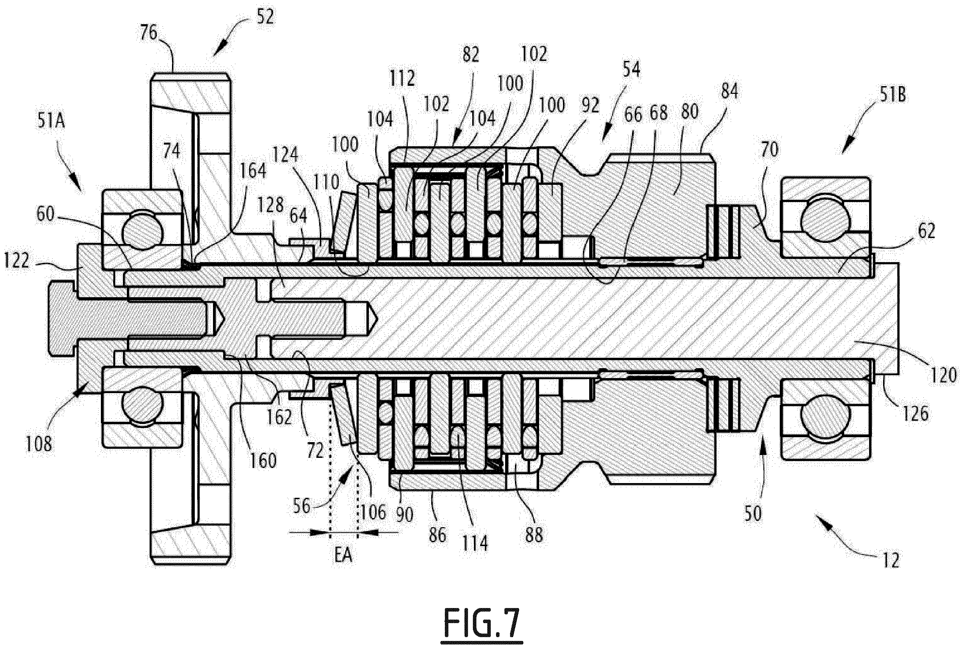

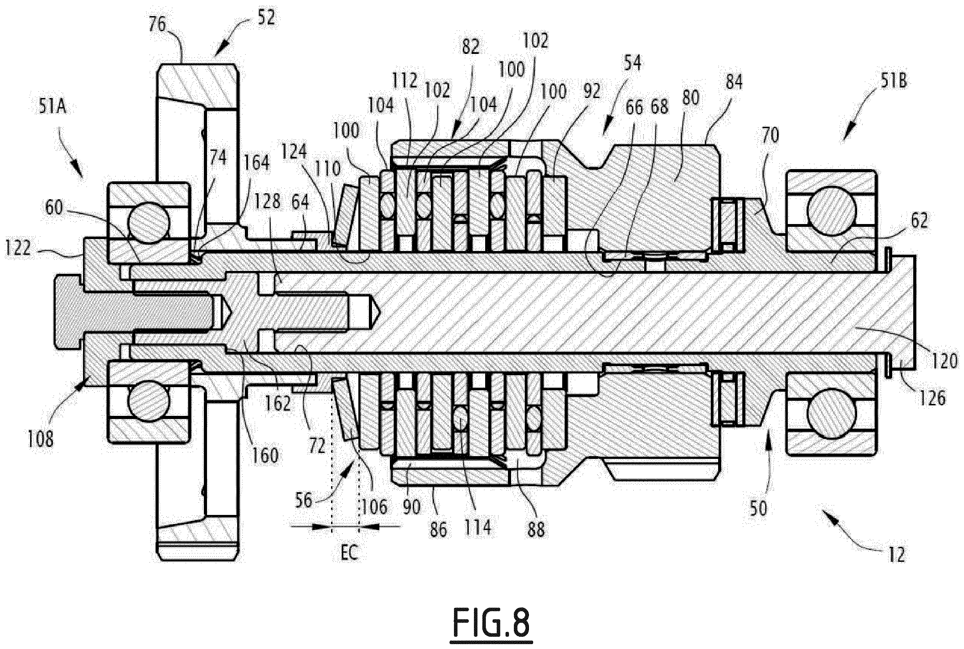

La butée 122 est montée sur la tête 162. La coopération entre la surface de butée 164 et l'appui de blocage 160 limite la diminution du serrage produit par l'organe de serrage 106, lorsque la température atteint la température de réglage du limiteur 12 (voir figure 7), puis augmente encore (voir figure 8).

Cette modification limite l'abattement de l'effort disponible lorsque le limiteur de couple 12 selon l'invention est exposé à une température plus élevée que la température de réglage initiale du limiteur 12 (environ 20°C).

Ainsi, lors d'une exposition du limiteur de couple 12 à une température élevée, la dilatation de l'organe de déplacement 120 a peu d'influence sur l'effort axial imposé à l'organe de serrage 106. En effet, bien que l'appui de blocage 160 en butée contre la surface 164 limite le déplacement de l'extrémité 128 de l'organe de déplacement 120, à gauche sur la figure 8, l'organe de déplacement 120 est libre de se dilater du côté de son autre extrémité 126.

Ainsi, comme visible sur les figures 7 et 8, l'étendue axiale EC de l'organe de serrage 106 à chaud reste sensiblement égale à l'étendue axiale EA de l'organe de serrage 106 à la température de réglage.

Le couple de déclenchement dans un environnement climatique chaud (+85°C dans notre cas) ne nuit donc pas à la valeur d'effort disponible développée par l'actionneur.

L'empilement des pièces du système débrayable 56 est en outre contenu dans un encombrement plus réduit entre l'arbre rotatif 50 et la cale de butée 122 par l'appui de blocage 160.

## Revendications

1. Limiteur de couple (12) d'actionneur (10) d'aéronef, destiné à être monté entre un moteur (28) et un mécanisme de déplacement (26) d'un organe d'actionnement (24) propre à être entrainé en rotation par le moteur (28), le limiteur de couple (12) comprenant :
- un arbre rotatif (50) autour d'un axe de rotation (C-C'), formé d'un premier matériau ;
- un organe entraîné (54) propre à être entraîné en rotation autour de l'axe de rotation (C-C') par l'arbre rotatif (50) ;
l'un de l'arbre rotatif (50) et de l'organe entraîné (54) étant destiné à être raccordé au moteur (28), l'autre de l'arbre rotatif (50) et de l'organe entraîné (54) étant destiné à être raccordé au mécanisme de déplacement (26) de l'organe d'actionnement (24) ;
- un système débrayable (56) de transmission de couple entre l'arbre rotatif (50) et l'organe entraîné (54), le système débrayable (56) comprenant un empilement de friction comportant au moins un organe de contact (100) monté solidaire en rotation avec l'arbre rotatif (50) et un organe de contact complémentaire (102), monté solidaire en rotation de l'organe entraîné (54), l'organe de contact complémentaire (102) étant propre à être entraîné en rotation par l'arbre rotatif (50) autour de l'axe de rotation (C-C') conjointement avec l'organe de contact (100) si le couple s'appliquant entre l'organe de contact (100) et l'organe de contact complémentaire (102) est inférieur à une valeur seuil de couple, et à être rotatif par rapport à l'organe de contact (100) autour de l'axe de rotation (C-C'), si le couple s'appliquant entre l'organe de contact (100) et l'organe de contact complémentaire (102) est supérieur ou égal à la valeur seuil ;
le système débrayable (56) comportant un organe de serrage (106) de l'empilement de friction comprenant l'organe de contact (100) et l'organe de contact complémentaire (102), le long de l'axe de rotation (C-C'),
le système débrayable (56) comportant un organe de déplacement (120) de l'organe de serrage (106), propre à se contracter ou à se dilater différentiellement par rapport à l'arbre rotatif (50) et à l'empilement de friction le long de l'axe de rotation (C-C') lors d'une variation de température, l'organe de déplacement (120) étant réalisé d'un deuxième matériau présentant un coefficient de dilatation thermique distinct du coefficient de dilatation thermique du premier matériau formant l'arbre rotatif (50),
**caractérisé en ce que** le système débrayable (56) comporte une butée de transmission (122) solidaire en translation de l'organe de déplacement (120), la butée de transmission (122) étant propre à se déplacer vers l'organe de serrage (106) pour augmenter le serrage s'appliquant sur l'empilement comprenant l'organe de contact (100) et l'organe de contact complémentaire (102) le long de l'axe de rotation (C-C') lors d'une contraction différentielle de l'organe de déplacement (120) par rapport à l'arbre rotatif (50) et à se déplacer à l'écart de l'organe de serrage (106) pour diminuer le serrage s'appliquant sur l'empilement comprenant l'organe de contact (100) et l'organe de contact complémentaire (102) le long de l'axe de rotation (C-C') lors d'une dilatation différentielle de l'organe de déplacement (120) par rapport à l'arbre rotatif (50).

2. Limiteur (12) selon la revendication 1, dans lequel le deuxième matériau présente un coefficient de dilatation thermique supérieur au coefficient de dilatation thermique du premier matériau.

3. Limiteur (12) selon la revendication 2, dans lequel la valeur absolue de la différence entre les coefficients de dilatation thermique du premier matériau et du deuxième matériau est supérieure à 10⁻⁶ mm/mm/°C.

4. Limiteur (12) selon l'une quelconque des revendications précédentes, dans lequel l'organe de déplacement (120) est logé dans un alésage (72) ménagé dans l'arbre rotatif (50).

5. Limiteur (12) selon la revendication 4, dans lequel l'organe de déplacement (120) est une tige.

6. Limiteur (12) selon l'une quelconque des revendications précédentes, dans lequel l'arbre rotatif (50) définit un appui (160) de blocage du déplacement longitudinal de l'organe de déplacement (120) lors d'une dilatation différentielle entre l'arbre rotatif (50) et l'organe de déplacement (120).

7. Limiteur (12) selon l'une quelconque des revendications précédentes, dans lequel l'organe de serrage (106) comporte une rondelle ressort.

8. Limiteur (12) selon l'une quelconque des revendications précédentes, dans lequel l'empilement de friction comporte un organe de friction (104) intermédiaire entre l'organe de contact (100) et l'organe de contact complémentaire (102).

9. Limiteur (12) selon l'une quelconque des revendications précédentes, comportant un organe rotatif d'entrée (52) solidaire en rotation de l'arbre rotatif (50), l'organe rotatif d'entrée (52) étant mobile en translation sur l'arbre rotatif (50) le long de l'axe de rotation (C-C') lors de la contraction ou de la dilatation différentielle de l'organe de déplacement (120).

10. Limiteur (12) selon l'une quelconque des revendications précédentes comprenant un palier lisse de guidage (68) de l'organe entrainé (54), l'organe entraîné (54) étant monté rotatif sur l'arbre rotatif (50) par l'intermédiaire du palier lisse de guidage (68), l'arbre rotatif (50) délimitant un logement annulaire (66) de réception du palier lisse de guidage (68).

11. Actionneur (10) d'aéronef comportant :
- un moteur (28) ;
- un organe mobile d'actionnement (24) ;
- un mécanisme (26) de déplacement de l'organe d'actionnement (24), propre à être entrainé par le moteur (28) ; et
- un limiteur de couple (12) selon l'une quelconque des revendications précédentes, interposé entre le moteur (28) et le mécanisme de déplacement (26) de l'organe d'actionnement (24).

12. Actionneur (10) selon la revendication 11, dans lequel le moteur (28) est propre à entraîner en rotation l'arbre rotatif (50), l'organe entraîné (54) étant relié au mécanisme de déplacement (26) de l'organe d'actionnement (24).

13. Aéronef (14), comportant une surface mobile, la surface mobile étant avantageusement un volet (16), l'aéronef (14) comportant un actionneur (10) selon l'une des revendications 11 ou 12, propre à déplacer la surface mobile.

14. Procédé d'utilisation d'un actionneur (10) d'aéronef comportant les étapes suivantes :
- fourniture d'un actionneur (10) selon l'une des revendications 11 ou 12, à une première température ;
- lors d'une variation de température, contraction ou dilatation différentielle de l'organe de déplacement (120) par rapport à l'arbre rotatif (50) le long de l'axe de rotation (C-C').

## Patentansprüche

1. Drehmomentbegrenzer (12) eines Stellantriebs (10) für Luftfahrzeug, der dazu bestimmt ist, zwischen einem Motor (28) und einem Verlagerungsmechanismus (26) eines Betätigungsorgans (24) montiert zu werden, das geeignet ist, durch den Motor (28) in Drehung versetzt zu werden, der Drehmomentbegrenzer (12) umfassend:
- eine um eine Drehachse (C-C') drehbare Welle (50), die aus einem ersten Material gebildet ist;
- ein angetriebenes Organ (54), das geeignet ist, um von der Drehwelle (50) um die Drehachse (C-C') gedreht zu werden;
wobei eines von der Drehwelle (50) und dem angetriebenen Organ (54) dazu bestimmt ist, mit dem Motor (28) verbunden zu sein, und das andere von der Drehwelle (50) und dem angetriebenen Organ (54) dazu bestimmt ist, mit dem Verlagerungsmechanismus (26) des Betätigungsorgans (24) verbunden zu sein;
- ein auskuppelbares System (56) zur Übertragung von Drehmoment zwischen der Drehwelle (50) und dem angetriebenen Organ (54), das auskuppelbare System (56) umfassend einen Reibungsstapel, der mindestens ein Kontaktorgan (100), das drehfest mit der Drehwelle (50) montiert ist, und ein komplementäres Kontaktorgan (102), das drehfest mit dem angetriebenen Organ (54) montiert ist, umfasst, wobei das komplementäre Kontaktorgan (102) geeignet ist, um gemeinsam mit dem Kontaktorgan (100) von der Drehwelle (50) um die Drehachse (C-C') in Drehung versetzt zu werden, wenn das zwischen dem Kontaktorgan (100) und dem komplementären Kontaktorgan (102) wirkende Drehmoment kleiner ist als ein Drehmomentschwellwert, und in Bezug auf das Kontaktorgan (100) um die Drehachse (C-C') drehbar ist, wenn das zwischen dem Kontaktorgan (100) und dem komplementären Kontaktorgan (102) wirkende Drehmoment größer als oder gleich wie der Schwellenwert ist;
das auskuppelbare System (56) umfassend ein Organ (106) zum Festklemmen des Reibungsstapels, der das Kontaktorgan (100) und das komplementäre Kontaktorgan (102) umfasst, entlang der Drehachse (C-C'),
das auskuppelbare System (56) umfassend ein Verlagerungsorgan (120) des Klemmorgans (106), das sich bei einer Temperaturänderung in Bezug auf die Drehwelle (50) und den Reibungsstapel entlang der Drehachse (C-C') differentiell zusammenziehen oder ausdehnen kann, wobei das Verlagerungsorgan (120) aus einem zweiten Material gefertigt ist, das einen Wärmeausdehnungskoeffizienten aufweist, der sich vom Wärmeausdehnungskoeffizienten des ersten Materials, das die Drehwelle (50) bildet, unterscheidet,
**dadurch gekennzeichnet, dass** das auskuppelbare System (56) einen Übertragungsanschlag (122) umfasst, der translatorisch fest mit dem Verlagerungsorgan (120) verbunden ist, wobei der Übertragungsanschlag (122) geeignet ist, um in Richtung des Klemmorgans (106) verlagert zu werden, um bei einer unterschiedlichen Kontraktion des Verlagerungsorgans (120) in Bezug auf die Drehwelle (50) die Klemmung entlang der Drehachse (C-C') zu erhöhen, die auf den Stapel aufgebracht wird, der das Kontaktorgan (100) und das komplementäre Kontaktorgan (102) umfasst, und sich von dem Klemmelement (106) wegzubewegen, um die Klemmung, die auf den das Kontaktorgan (100) und das Gegenkontaktelement (102) umfassenden Stapel entlang der Drehachse (C-C') wirkt, bei einer unterschiedlichen Ausdehnung des Verlagerungsorgans (120) in Bezug auf die Drehwelle (50) zu verringern.

2. Begrenzer (12) nach Anspruch 1, wobei das zweite Material einen Wärmeausdehnungskoeffizienten aufweist, der größer ist als der Wärmeausdehnungskoeffizient des ersten Materials.

3. Begrenzer (12) nach Anspruch 2, wobei der Absolutwert der Differenz zwischen den Wärmeausdehnungskoeffizienten des ersten Materials und des zweiten Materials größer ist als 10⁻⁶ mm/mm/°C ist.

4. Begrenzer (12) nach einem der vorherigen Ansprüche, wobei das Verlagerungsorgan (120) in einer Bohrung (72) in der Drehwelle (50) untergebracht ist.

5. Begrenzer (12) nach Anspruch 4, wobei das Verlagerungsorgan (120) eine Stange ist.

6. Begrenzer (12) nach einem der vorherigen Ansprüche, wobei die Drehwelle (50) ein Widerlager (160) zum Blockieren der Längsverlagerung des Verlagerungsorgans (120) bei einer unterschiedlichen Ausdehnung zwischen der Drehwelle (50) und dem Verlagerungsorgan (120) definiert.

7. Begrenzer (12) nach einem der vorherigen Ansprüche, wobei das Klemmorgan (106) eine Tellerfeder umfasst.

8. Begrenzer (12) nach einem der vorherigen Ansprüche, wobei der Reibungsstapel ein Reibungsorgan (104) zwischen dem Kontaktorgan (100) und dem komplementären Kontaktorgan (102) umfasst.

9. Begrenzer (12) nach einem der vorherigen Ansprüche, umfassend ein drehbares Eingangsorgan (52), das drehfest mit der Drehwelle (50) verbunden ist, wobei das drehbare Eingangsorgan (52) auf der Drehwelle (50) entlang der Drehachse (C-C') bei der unterschiedlichen Kontraktion oder Ausdehnung des Verlagerungsorgans (120) translatorisch beweglich ist.

10. Begrenzer (12) nach einem der vorherigen Ansprüche, umfassend ein Führungsgleitlager (68) für das angetriebene Organ (54), wobei das angetriebene Organ (54) über das Führungsgleitlager (68) drehbar auf der Drehwelle (50) gelagert ist, wobei die Drehwelle (50) eine ringförmige Aufnahme (66) für das Führungsgleitlager (68) begrenzt.

11. Stellantrieb (10) eines Luftfahrzeugs, umfassend:
- einen Motor (28);
- ein bewegliches Betätigungsorgan (24);
- einen Mechanismus (26) zum Bewegen des Betätigungsorgans (24), der geeignet ist, um von dem Motor (28) angetrieben zu werden; und
- einen Drehmomentbegrenzer (12) nach einem der vorherigen Ansprüche, der zwischen dem Motor (28) und dem Verlagerungsmechanismus (26) des Betätigungsorgans (24) eingefügt ist.

12. Stellantrieb (10) nach Anspruch 11, wobei der Motor (28) geeignet ist, um die Drehwelle (50) in Drehung zu versetzen, wobei das angetriebene Organ (54) mit dem Verlagerungsmechanismus (26) des Betätigungsorgans (24) verbunden ist.

13. Luftfahrzeug (14), umfassend eine bewegliche Fläche, wobei die bewegliche Fläche vorteilhafterweise eine Klappe (16) ist, wobei das Luftfahrzeug (14) einen Stellantrieb (10) nach einem der Ansprüche 11 oder 12 aufweist, der geeignet ist, um die bewegliche Fläche zu bewegen.

14. Verfahren zur Verwendung eines Stellantriebs (10) für Luftfahrzeug, umfassend die folgenden Schritte:
- Bereitstellen eines Stellantriebs (10) nach einem der Ansprüche 11 oder 12 bei einer ersten Temperatur;
- bei einer Temperaturänderung unterschiedliche Kontraktion oder Ausdehnung des Verlagerungsorgans (120) in Bezug auf die Drehwelle (50) entlang der Drehachse (C-C').

## Claims

1. An aircraft actuator (10) torque limiter (12), intended to be mounted between a motor (28) and a movement mechanism (26) of an actuating member (24) able to be driven in rotation by the motor (28), the torque limiter (12) comprising:
- a rotary shaft (50) rotating about an axis of rotation (C-C'), formed from a first material;
- a driven member (54) able to be driven in rotation about the axis of rotation (C-C') by the rotary shaft (50);
one of the rotary shaft (50) and the driven member (54) being intended to be connected to the motor (28), the other of the rotary shaft (50) and the driven member (54) being intended to be connected to the movement mechanism (26) of the actuating member (24);
- a disengageable torque transmission system (56) between the rotary shaft (50) and the driven member (54), the disengageable system (56) comprising a friction pack including at least one contact member (100) mounted secured in rotation with the rotary shaft (50) and a complementary contact member (102), mounted secured in rotation with the driven member (54), the complementary contact member (102) being able to be rotated by the rotary shaft (50) about the axis of rotation (C-C') jointly with the contact member (100) if the torque applied between the contact member (100) and the complementary contact member (102) is below a torque threshold value, and being rotative relative to the contact member (100) about the axis of rotation (C-C') if the torque applied between the contact member (100) and the complementary contact member (102) is greater than or equal to the threshold value;
the disengageable system (56) including a clamping member (106) of the friction pack comprising the contact member (100) and the complementary contact member (102), along the axis of rotation (C-C'),
the disengageable system (56) including a movement member (120) of the clamping member (106), able to contract or expand differentially relative to the rotary shaft (50) and to the friction pack along the axis of rotation (C-C') during a temperature variation, the movement member (120) being made from a second material having a thermal expansion coefficient different from the thermal expansion coefficient of the first material forming the rotary shaft (50),
**characterized in that** the disengageable system (56) includes a transmission stop (122) secured in translation with the movement member (120), the transmission stop (122) being able to move toward the clamping member (106) in order to increase the clamping applied on the stack comprising the contact member (100) and the complementary contact member (102) along the axis of rotation (C-C') during a differential contraction of the movement member (120) relative to the rotary shaft (50) and to move away from the clamping member (106) in order to decrease the clamping applied on the stack comprising the contact member (100) and the complementary contact member (102) along the axis of rotation (C-C') during a differential expansion of the movement member (120) relative to the rotary shaft (50).

2. The limiter (12) according to claim 1, wherein the second material has a thermal expansion coefficient greater than the thermal expansion coefficient of the first material.

3. The limiter (12) according to claim 2, wherein the absolute value of the difference between the thermal expansion coefficients of the first material and the second material is greater than 10⁻⁶ mm/mm/°C.

4. The limiter (12) according to any one of the preceding claims, wherein the movement member (120) is housed in a bore (72) arranged in the rotary shaft (50).

5. The limiter (12) according to claim 4, wherein the movement member (120) is a rod.

6. The limiter (12) according to any one of the preceding claims, wherein the rotary shaft (50) defines a blocking bearing (160) of the longitudinal movement of the movement member (120) during a differential expansion between the rotary shaft (50) and the movement member (120).

7. The limiter (12) according to any one of the preceding claims, wherein the clamping member (106) includes a spring washer.

8. The limiter (12) according to any one of the preceding claims, wherein the friction pack includes an intermediate friction member (104) between the contact member (100) and the complementary contact member (102).

9. The limiter (12) according to any one of the preceding claims, including a rotary input member (52) secured in rotation with the rotary shaft (50), the rotary input member (52) being translatable on the rotary shaft (50) along the axis of rotation (C-C') during the contraction or the differential expansion of the movement member (120).

10. The limiter (12) according to any one of the preceding claims, comprising a smooth guide bearing (68) of the driven member (54), the driven member (54) being mounted rotating on the rotary shaft (50) via the smooth guide bearing (68), the rotary shaft (50) delimiting an annular housing (66) for receiving the smooth guide bearing (68).

11. An aircraft actuator (10) including:
- a motor (28);
- a mobile actuating member (24);
- a movement mechanism (26) of the actuating member (24), able to be driven by the motor (28); and
- a torque limiter (12) according to any one of the preceding claims, inserted between the motor (28) and the movement mechanism (26) of the actuating member (24).

12. The actuator (10) according to claim 11, wherein the motor (28) is able to rotate the rotary shaft (50), the driven member (54) being connected to the movement mechanism (26) of the actuating member (24).

13. An aircraft (14), including a mobile surface, the mobile surface advantageously being a flap (16), the aircraft (14) including an actuator (10) according to one of claims 11 or 12, able to move the mobile surface.

14. A method for using an aircraft actuator (10) including the following steps:
- providing an actuator (10) according to one of claims 11 or 12, at a first temperature;
- during a temperature variation, differential contraction or expansion of the movement member (120) relative to the rotary shaft (50) along the axis of rotation (C-C').
